# EUROPÄISCHE PATENTANMELDUNG

(11) **EP 4 039 129 A1**
(43) Veröffentlichungstag der Anmeldung: **10.08.2022**
(21) Anmeldenummer: 22155210.2
(22) Anmeldetag: 04.02.2022
(51) Int. Cl.: A46B 3/06, A46D 3/04, B29C 65/56, B29C 65/00, A46B 3/08, B29C 65/02, B29C 65/14, B29C 65/60

(54) **VERFAHREN ZUR HERSTELLUNG EINER BÜRSTE**

(30) Priorität: 04.02.2021 DE 102021102624
(71) Anmelder: M+C Schiffer GmbH, 53577 Neustadt/Wied (DE)
(72) Erfinder: CLOS, Thomas, 50968 Köln (DE)
(74) Vertreter: Grünecker Patent- und Rechtsanwälte PartG mbB

(57) **Zusammenfassung**

Die vorliegende Erfindung betrifft ein Verfahren zur Herstellung einer Bürste, insbesondere Zahnbürste, die einen Borstenträger (18) aus einem thermoplastischen Kunststoff mit einer Vorderseite (25) und einer Rückseite aufweist, wobei von der Vorderseite zumindest eine in dem Borstenträger (18) ausgesparte Ausnehmung (20) abgeht, in welcher wenigstens eine Borste (4) gehalten ist, bei dem die wenigstens eine Borste (4) in einer Aufnahmeöffnung (6) eines Werkzeugs (2) aufgenommen wird, die wenigstens eine Borste (4) zur Ausbildung einer Verdickung (12) an ihrem befestigungsseitigen Ende (8) angeschmolzen wird; die wenigstens eine Borste (4) mit ihrem befestigungsseitigen Ende (8) in die Ausnehmung (20) eingebracht wird der Abstand des Werkzeugs (2) zum Borstenträger (18) so reduziert wird, dass das Werkzeug (2) den Borstenträger (18) kontaktiert, der thermoplastische Kunststoff erwärmt und durch Anpressen des Werkzeugs (2) gegen die Vorderseite des Borstenträgers (18) so verformt wird, dass der thermoplastische Kunststoff zumindest im Bereich eines die Ausnehmung (20) umgebenden Randes zur formschlüssigen eine Siegelung der Verdickung (12) radial nach innen in die Ausnehmung (20) verdrängt wird, wobei zur Vereinfachung der Verfahrensführung ein radial benachbart zu der Ausnehmung (20) vorgesehener Vorsprung (22) in den thermoplastischen Kunststoff eingedrückt wird.

## Beschreibung

Die vorliegende Erfindung betrifft ein Verfahren zur Herstellung einer Bürste, insbesondere einer Zahnbürste, die einen Borstenträger aus einem thermoplastischen Kunststoff mit einer Vorderseite und einer Rückseite aufweist, wobei von der Vorderseite zumindest eine in dem Borstenträger ausgesparte als Sackloch in dem Borstenträger ausgebildete Ausnehmung abgeht, in welcher wenigstens eine Borste gehalten ist.

Solche Bürsten sind allgemein bekannt. Die vorliegende Erfindung will insbesondere die Art und Weise verbessern, wie die Borste an dem Borstenträger befestigt werden kann.

Die EP 1 110 479 A1 betrifft ein Verfahren zum Befestigen von Borstenbüscheln für Bürsten an Trägern aus Kunststoff, bei dem eine in dem Borstenträger ausgesparte Ausnehmung als Durchgangsbohrung ausgebildet ist.

Die WO 2017/186371 A1 beschreibt ein gattungsgemäßes Verfahren, bei welchem die Borste in eine als Sackloch gebildete Aufnahmeöffnung eines Werkzeugs aufgenommen und an ihrem befestigungsseitigen Ende aufgeschmolzen wird. Danach wird die Borste mit ihrem befestigungsseitigen Ende in das Sackloch eingebracht. Der Abstand zwischen dem Werkzeug und dem Borstenträger wird so reduziert, dass das Werkzeug den Borstenträger kontaktiert. Bei dem Vorgehen nach WO 2017/186371 A1 ist das Werkzeug beheizt, so dass beim Anlegen des Werkzeugs gegen die Vorderseite der thermoplastische Kunststoff erweicht wird. Das Werkzeug hat eine Werkzeugoberfläche, deren Kontur der Vorderseite entspricht.

So will das Vorgehen nach diesem Stand der Technik das thermoplastische Material lokal im Bereich der Oberfläche aufweichen und durch einen äußeren Druck durch Anpressen des Werkzeugs gegen die Vorderseite das Material des Borstenträgers radial in die Ausnehmung drücken, so dass die Verdickung jedenfalls im Bereich der Vorderseite von dem thermoplastischen Material überdeckt und damit formschlüssig in der Ausnehmung gehalten ist. Denn nach dem Verformen des Materials des Borstenträgers wird das Werkzeug von dem Borstenträger entfernt und hierbei die Borste aus der Aufnahmeöffnung gezogen.

Damit begegnet der Vorschlag nach WO 2017/186371 A1 einem Nachteil gemäß DE 198 53 030 A1, bei welchem nach dem Einbringen des Borstenbündels der Bürstenkörper insgesamt komprimiert wird, um die Verdickung innerhalb des Borstenträgers einzuschließen.

Es hat sich indes gezeigt, dass beide Vorschläge vergleichsweise hohe Drücke benötigen, um das thermoplastische Material des Borstenträgers so plastisch zu verformen, dass die Borste sicher mit dem Borstenträger verbunden ist. Die in Längsrichtung durch den Bürstenkörper hindurch wirkende Presskraft führt im Übrigen auch zu einer Tendenz des Bürstenkopfes, nach außen verformt zu werden. Im Hinblick darauf schlägt WO 2017/186371 A1 ein dem Borstenträger jedenfalls im Bereich des die Borste haltenden Bürstenkopfes des Borstenträgers vollständig einschließendes Gesenk vor, welches unerwünschte Verformungen des Borstenträgers vermeiden soll. Die Lösung ist aber konstruktiv aufwändig.

Die vorliegende Erfindung will das zuvor beschriebene Verfahren vereinfachen.

Im Hinblick darauf schlägt die vorliegende Erfindung ein Verfahren mit den Merkmalen von Anspruch 1 vor.

Bei diesem Verfahren wird der thermoplastische Kunststoff wie bei dem Verfahren nach WO 2017/186371 A1 erwärmt, so dass das thermoplastische Material infolge einer Druckbeanspruchung fließen und so das Bündel mit seiner Verdickung formschlüssig in dem Borstenträger einsiegeln kann. Allerdings erfolgt diese Umformung des thermoplastischen Materials durch einen Vorsprung, der benachbart zu der Ausnehmung, d. h. radial dazu in den thermoplastischen Kunststoff eingedrückt wird. Der entsprechende Vorsprung bewirkt eine lokale Verformung des erwärmten thermoplastischen Materials, welches aufgrund dieser Verformung die Verdickung in dem Borstenträger einsiegelt. Der Vorsprung wirkt dabei gegen die üblicherweise ebene, glatte und absatzfreie Vorderfläche auf der Vorderseite des Borstenträgers.

Mit der vorliegenden Erfindung wird vorgeschlagen, das thermoplastische Material einerseits zu erwärmen, so dass sich dieses leichter verformen lässt, andererseits aber diese Verformung nur auf einen Bereich unmittelbar um die Ausnehmung auf der Vorderfläche des Borstenträgers zu beschränken. Dadurch werden die insgesamt notwendigen Kräfte zur formschlüssigen Einsiegelung der Verdickung reduziert. So lässt sich das Verfahren einfacher und damit kostengünstiger durchführen.

Das erfindungsgemäße Verfahren wird üblicherweise durchgeführt, um eine Vielzahl von Borsten, üblicherweise aufweisend jeweils eine Vielzahl von Filamenten, so dass die Borsten als Borstenbündel an dem Borstenträger gehalten sind, mit diesem zu verbinden. Dazu weist das Werkzeug eine Vielzahl von Aufnahmeöffnungen auf. Die Aufnahmeöffnungen sind üblicherweise als durchgehende Kanäle ausgeformt. So besteht die Möglichkeit, die Borste bzw. das Borstenbündel axial relativ zu dem Werkzeug zu verschieben, beispielsweise einzelne Filamente innerhalb eines Borstenbündels zu verschieben, um das Borstenbündel so nutzungsseitig zu konturieren, bevor an der Befestigungsseite die Verdickung durch Anschmelzen ausgebildet wird. Das Borstenbündel wird beim Einbringen in die Ausnehmung entweder umfänglich, beispielsweise an dem Werkzeug, geklemmt, bevorzugt aber nutzungsseitig, d.h. an seinem stirnseitigen freien Ende abgestützt.

Bei der bevorzugten Verfahrensführung werden mehrere Borsten im Rahmen der Zustellbewegung des Werkzeugs auf den Borstenträger zu in die ihnen zugeordnete Ausnehmung eingebracht. Es versteht sich, dass die Borsten bzw. Borstenbündel gehalten an dem Werkzeug zuvor durch Anschmelzen jeweils mit einer eigenständigen Verdickung pro Borste bzw. Borstenbündel versehen worden sind. Bei dieser bevorzugten Verfahrensführung wird zu jeder der Ausnehmungen zumindest ein Vorsprung in das thermoplastische Material eingedrückt, um die Verdickung in der entsprechenden Ausnehmung formschlüssig einzusiegeln.

Danach kann eine Bürste mit einer Vielzahl von Borsten, insbesondere Borstenbündeln, wirtschaftlich und einfach hergestellt werden.

Bei der erfindungsgemäßen Lösung ist die Ausnehmung als Sackloch in dem Borstenträger ausgebildet. Hinsichtlich der Grundform der Ausnehmung unterliegt die erfindungsgemäße Lösung keinen besonderen Beschränkungen. So kann es sich bei der Ausnehmung um eine kreisrunde Öffnung handeln. Die Ausnehmung kann aber in der Vorderfläche des Borstenträgers auch eine längliche Öffnung aufweisen, die geradlinig verläuft oder gekrümmt.

Die Bewegung des Werkzeugs kann weg- oder kraftgesteuert sein. Die aufzubringende Kraft wird als diejenige Kraft bestimmt, die notwendig ist, um die gewünschte, örtlich auf die jeweilige Ausnehmung begrenzte Verformung des thermoplastischen Materials zu erzielen, so dass die Verdickung formschlüssig in dem Borstenträger eingesiegelt ist.

Gemäß einer bevorzugten Weiterbildung der vorliegenden Erfindung wird eine gegenüberliegend zu der Vorderseite des Borstenträgers vorgesehene, der Kontur der Vorderseite des Borstenträgers entsprechende Werkzeugoberfläche zusammen mit dem Vorsprung in Richtung auf den Borstenträger angenähert. Am Ende der Relativbewegung zwischen dem Borstenträger und dem Werkzeug wird die entsprechende Werkzeugoberfläche flächig gegen die Vorderseite des Borstenträgers angelegt. Damit findet die Zustellbewegung des Werkzeugs durch flächige Anlage gegen den Borstenträger einen vorbestimmbaren Endpunkt. Die Zustellbewegung des Werkzeugs kann dabei kraftgesteuert erfolgen. Mit Anlage des Werkzeugs gegen den Borstenträger nimmt die für die Bewegung des Werkzeugs erforderliche Kraft stark zu. Diese Zunahme der Kraft kann als Signal ausgewertet werden, die Zustellbewegung zu beenden und das Einsiegeln der Verdickung als beendet zu qualifizieren.

Danach wird das Werkzeug angehoben, wobei sich die Borste bzw. sämtliche darin gehaltene Borsten aus dem Werkzeug herausziehen, da diese mit dem Borstenträger verbunden sind.

Gemäß einer bevorzugten Weiterbildung der vorliegenden Erfindung wirkt der Vorsprung in Form von auf einer Ringfläche liegenden Ringsegmenten auf die Vorderseite des Bürstenkörpers ein. Die Ringsegmente können unmittelbar aufeinander folgend vorgesehen sein und einen geschlossenen Ring ausbilden. Alternativ können die Ringsegmente auch mit Abstand zueinander vorgesehen sein und zwischen sich Freiräume auslassen, Die durch die ebene und glatte Oberfläche des Werkzeugs gebildet sind.

Dieser Ring bzw. die auf der Ringfläche beabstandet zueinander liegenden Ringsegmente umgibt/umgeben die jeweilige Ausnehmung vollumfänglich bzw. umfänglich. Der Ring muss dabei nicht notwendigerweise ein Ring mit kreisrunder Form sein. Vielmehr ist der Ring auf die Außenkontur der Ausnehmung angepasst ausgebildet und umgibt diese üblicherweise mit konstantem Abstand zu dem Rand der Ausnehmung umfänglich. Mehrere Ausnehmungen jeweils umgebende Ringsegmente können sich schneiden, so dass zumindest an einem Punkt benachbarte Ausnehmungen sich einen Vorsprung teilen.

Der Abstand sollte unter 1 Millimeter liegen. Als Abstand wird dabei der minimalste Abstand der Verdickung von dem Rand der Ausnehmung verstanden. Im Falle eines spitz zulaufenden Vorsprungs sollte der Abstand auch beim maximalen Eindrücken des Vorsprungs in das thermoplastische Material eingehalten werden. Der Abstand zwischen dem Vorsprung und dem Rand liegt bevorzugt zwischen 0,5 mm und 0,05 mm.

Im Hinblick auf eine gute Verformung ist der Vorsprung bevorzugt mit einer spitz zulaufenden Querschnittsgeometrie ausgebildet. Bei dieser Ausgestaltung trifft die Spitze des Vorsprungs bei der Annäherung des Vorsprungs an den Borstenträger zunächst auf die Oberseite des Borstenträgers auf. Dabei hat der Vorsprung eine in Richtung auf die Ausnehmung abgeschrägte Verformungsfläche. Die gegenüberliegende, der Ausnehmung abgewandte Fläche kann beliebig ausgestaltet sein. Sie kann sich beispielsweise orthogonal zu der Vorderfläche des Borstenträgers erstrecken. Durch die spitz zulaufende, keilförmige Querschnittsgeometrie ergibt sich mit zunehmender Annäherung eine Erhöhung der für die Bewegung des Werkzeugs geforderten Kraft. Durch die tatsächlich aufgewendete Kraft kann die Einpresstiefe gesteuert werden.

Alternativ kann der Vorsprung im Querschnitt auch zylindrisch mit einem kuppelförmigen vorderen Ende ausgebildet sein. Das auf den thermoplastischen Kunststoff einwirkende vordere Ende des Vorsprungs ist bevorzugt in der Querschnittsansicht halbkreisförmig ausgebildet.

Bevorzugt IST der Vorsprung zur Erweichung des thermoplastischen Materials erwärmt. Die Temperatur des Vorsprungs kann der Temperatur des Werkzeugs entsprechen. Im Hinblick auf eine möglichst energieschonende Verfahrensführung wird indes vorgeschlagen, dass dem von der Werkzeugfläche abragenden Vorsprung eine Heizung zugeordnet ist, die den Vorsprung auf eine höhere Temperatur als die Werkzeugoberfläche erwärmt. So ist bevorzugt derjenige Bereich des Vorsprungs, der von der Werkzeugoberfläche abragt, mit einer Heizung unterlegt. Diese sorgt dafür, dass der Vorsprung stärker erwärmt wird, als die Werkzeugoberfläche. Durch angemessene Wahl von Materialien mit unterschiedlicher Wärmeleitfähigkeit kann die Wärmeauskopplung auf den Vorsprung ausgerichtet werden. Das den Vorsprung ausbildende Material sollte eine höhere Wärmeleitfähigkeit haben als das Material des Werkzeugs.

Gemäß einer bevorzugten Weiterbildung der vorliegenden Erfindung hat der Borstenträger beim formschlüssigen Einsiegeln der Verdickung noch eine aufgrund des Spritzgießens erhöhte Temperatur. Diese Temperatur liegt üblicherweise zumindest 20, bevorzugt zumindest 30 Grad über der Raumtemperatur. Dadurch lässt sich das erfindungsgemäße Verfahren besonders energieschonend durchführen. Der Borstenträger wird nach dem Spritzgießen nicht erst abgekühlt und danach zumindest lokal im Bereich der Vorderseite erwärmt. Vielmehr wird die Durchwärmung des Borstenträgers aufgrund des Spritzgießens genutzt, um eine verbesserte plastische Verformung beim Eindringen des Vorsprungs in das thermoplastische Material zu erzielen.

Dazu kann es sinnvoll sein, den Borstenträger mit einem Formnestsegment aus dem Spritzgießwerkzeug zu entnehmen, welches üblicherweise zumindest die Rückseite des Borstenträgers beim Einspritzen des schmelzflüssigen Kunststoffs ausformt. Ein solches Formnestsegment ist üblicherweise in das eigentliche Spritzgießwerkzeug eingesetzt. Dem Formnestsegment sind üblicherweise auf Seiten des Spritzgießwerkzeugs Kühlkanäle unterlegt, sodass der Borstenträger zumindest noch so lange gekühlt und unter die Erstarrungstemperatur gebracht wird, wie dies beim üblichen Spritzgießen bis zur Entformung erfolgt. Zur einfachen Handhabung des Formnestsegmentes ist dieses selbst nicht mit Kühlkanälen versehen. Bei der hier diskutierten bevorzugten Weiterbildung der vorliegenden Erfindung wird überraschenderweise der Borstenträger beim Öffnen des Spritzgießwerkzeugs in dem Formnestsegment belassen, welches einem Formnest gegenüberliegt, das Stifte aufweist, die im Rahmen des Spritzgießens die zumindest eine Ausnehmung in dem Borstenkörper ausbildet. Dazu kann die Spritzgießform Niederhalter oder dergleichen aufweisen, welche auf den spritzgegossenen Borstenträger einwirken, um diesen in dem die Rückseite des Borstenträgers abformenden Formnestsegment zu belassen, während die gegenüberliegende Werkzeughälfte von dem Borstenträger abhebt und dabei den zumindest einen Stift aus der Ausnehmung des Borstenträgers zieht.

Die Weiterbildung nach den Ansprüchen 9 und 10 können für sich erfindungswesentlich sein, d.h. zusammen mit den oberbegrifflichen Merkmalen von Anspruch 1 die Erfindung definieren.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: schematische Ansichten verschiedener Stationen der Verfahrensführung, wobei in jeder Station A-F perspektivische Ansichten der jeweiligen Komponenten von oben und von unten gezeigt sind;
- Fig. 2: eine Querschnittsansicht des Borstenträgers und des Werkzeugs vor dem Einbringen der Verdickung in eine Ausnehmung; und
- Fig. 3: eine Querschnittsansicht gemäß Figur 2 nach dem Einbringen der Verdickung in die Ausnehmung;
- Fig. 4: eine Querschnittsansicht gemäß den Figuren 2 und 3 beim Einsiegeln der Verdickung in der Ausnehmung, und
- Fig. 5: eine Querschnittsansicht gemäß den Figur 4 für eine alternative Form eines Vorsprungs.

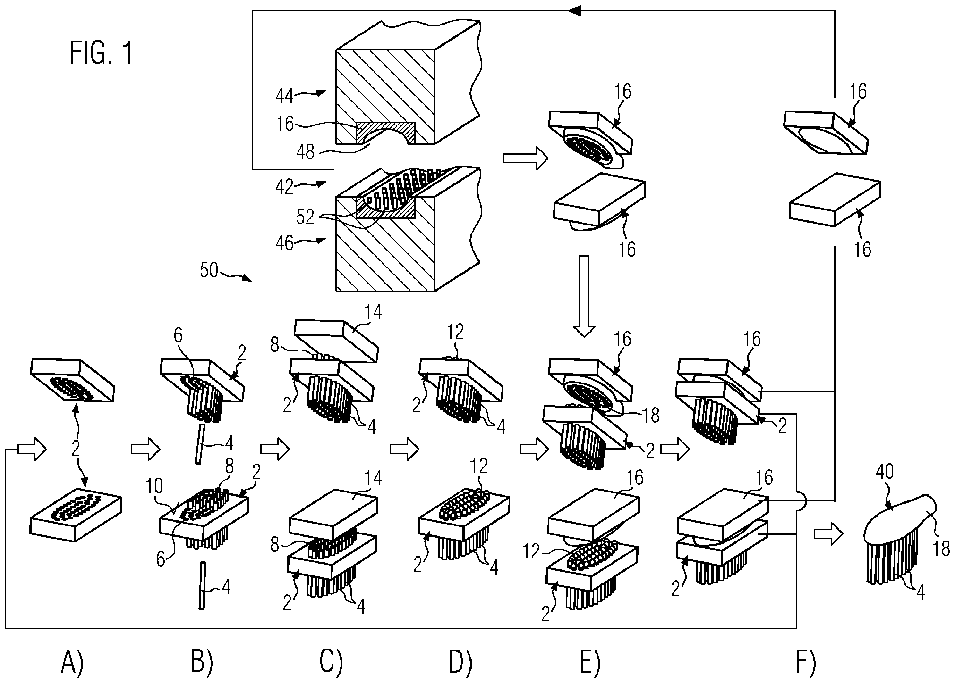

In Fig. 1 kennzeichnet A eine Bestückungsstation, in welcher ein Werkzeug 2 mit einer Vielzahl von Borsten 4 gebildet als Borstenbündel mit einer Vielzahl von Filamenten bestopft wird. Das Werkzeug 2 hat dafür eine Vielzahl von Aufnahmeöffnungen 6 in Form von Haltekanälen. Die jeweiligen Borsten 4 überragen mit ihrem befestigungsseitigen Ende 8 eine Werkzeugoberfläche 10.

In der in Fig. 1B gezeigten Heizstation wird das befestigungsseitige Ende 8 der Borsten 4 zur Ausbildung einer Verdickung 12 angeschmolzen, wozu eine Wärmequelle 14 gegenüberliegend zu dem Werkzeug 2 angeordnet wird. Durch die Wärme der Wärmequelle 14 werden sämtliche Filamente einer Borste 4 zeitgleich angeschmolzen und über die Verdickung 12 zu einer Einheit ausgeformt. Wie üblich überragt die Verdickung 12 nach dem Aufschmelzen radial die Borste 4. So ist das befestigungsseitige Ende 8 der Borste 4 dicker als der Durchmesser der Borste 4 selbst.

In Station 1C kühlt die Verdickung 12 ab.

In Station 1D wird gegenüberliegend zu dem Werkzeug 2 eine Trägerplatte 16 angeordnet, welche einen Borstenträger 18 hält. Bei dem gezeigten Ausführungsbeispiel umfasst der Borstenträger 16 den Kopf einer Zahnbürste mit einer Vielzahl von Ausnehmungen 20.

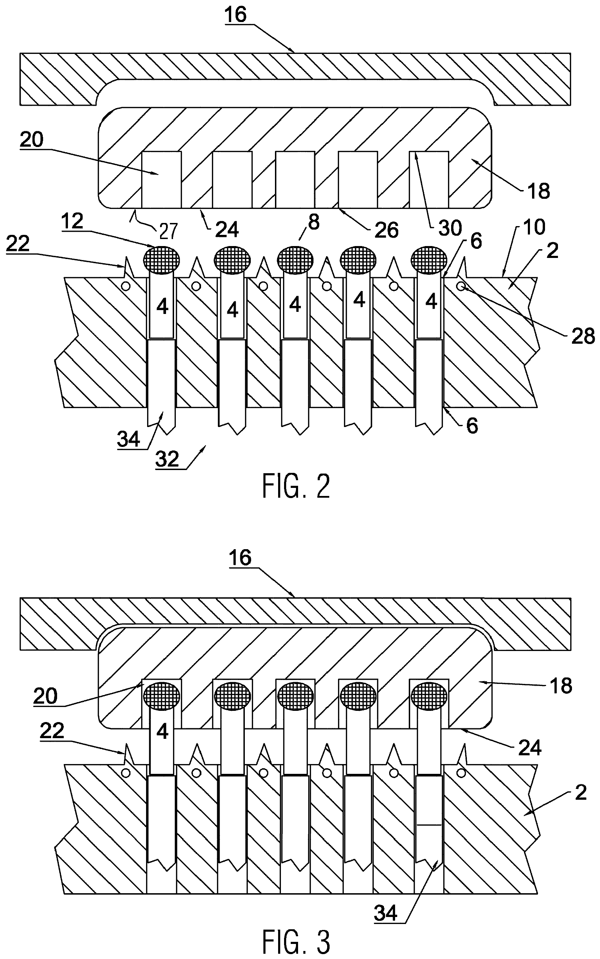

In Fig. 1E sind der Borstenträger 18 und damit die Trägerplatte 16 und das Werkzeug 2 aufeinander zu bewegt worden. Im Rahmen dieser Relativbewegung wird das befestigungsseitige Ende 8 mit der Verdickung 12 in eine der Ausnehmungen 20 eingebracht, was in den Fig. 2 bis 4 im Detail gezeigt ist.

Die Schnittdarstellungen gemäß den Fig. 2 bis 4 zeigen das die Aufnahmeöffnung 6 bildende Langloch in Querschnittsansicht. Die Borste 4 ist darin aufgenommen. Die Verdickung 12 überragt die Werkzeugoberfläche 10. Von der Werkzeugoberfläche 10 ragt ferner ein Vorsprung 22 ab, der vorliegend zu seinem freien Ende hin spitz zulaufend ausgebildet ist. Der Vorsprung 22 ist als in sich geschlossener Ring ausgebildet und umgibt dementsprechend die Borste 4 vollumfänglich. Der Vorsprung 22 ragt von der ansonsten ebenen Werkzeugoberfläche 10 ab. Diese Werkzeugoberfläche 10 ist ansonsten ebenso wie eine mit Bezugszeichen 24 gekennzeichnete Vorderfläche des Borstenträgers 18. Diese Vorderfläche 24 und die Werkzeugoberfläche 10 haben den gleichen Verlauf. Sie sind identisch ausgeformt.

Die Ausnehmung 22 bildet mit der Vorderfläche 24 eine rechtwinklige Kante aus, deren in einer Vorderseite 25 liegende Begrenzungsfläche als Rand mit Bezugszeichen 27 gekennzeichnet ist.

Die Schnittdarstellung gemäß den Fig. 2 bis 4 verdeutlicht auch eine Heizeinrichtung 28, die dem Vorsprung 22 unterlegt ist, so dass der Vorsprung 22 auf eine erhöhte Temperatur aufgeheizt wird.

Ausgehend von der in Fig. 2 gezeigten Ausgangsstellung werden die Borsten 4 dem Werkzeug 2 angenähert. Dabei wird die Verdickung 12 in die Ausnehmung 20 eingebracht (Fig. 3). Diese Einbringbewegung erfolgt bei dem gezeigten Ausführungsbeispiel durch Bewegung einer Vorschubeinrichtung 32, die eine Vielzahl von Vorschubstiften 34 aufweist, die mit dem Muster der Aufnahmeöffnungen 6 in dem Werkzeug 2 ausgebildet sind und gegen nutzungsseitige Enden 36 aller Borsten 4 anliegen, relativ zu dem Werkzeug 2. Dadurch werden die Borsten 2 relativ zu dem Werkzeug 2 zu bewegt und aus diesem ausgeschoben. Der Abstand des Werkzeugs 2 relativ zu der Trägerplatte 16 wird zunächst nicht verändert.

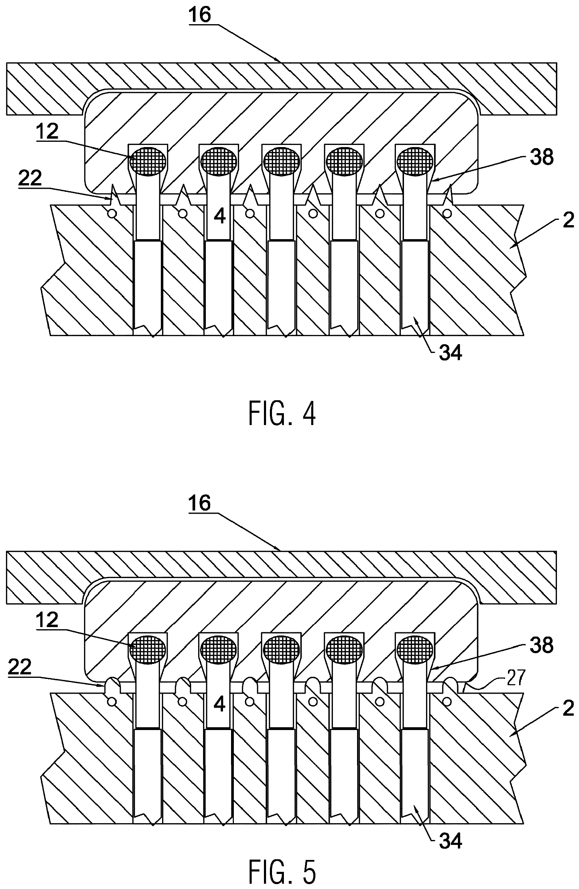

Die Verdickung 12 stößt schließlich gegen einen mit Bezugszeichen 30 gekennzeichneten Boden der Ausnehmung 20. Danach wird das Werkzeug 2 in Richtung auf den Borstenträger 18 angenähert. Die Borsten und die Vorschubeinrichtung 32 verbleiben dabei ortsfest zu dem Borstenträger 18. Infolge dieser Annäherung berührt der Vorsprung 22 mit seinem spitz zulaufenden Ende die Vorderfläche 24 des Borstenträgers 18. Bei fortschreitender Verringerung des Abstandes zwischen den Werkzeug 2 und dem Borstenträger 18 wird der Vorsprung 22 in den Rand 27 gedrängt. Dabei wird das durch Erwärmen erweichte thermoplastische Material radial nach innen in die Ausnehmung 20 verdrängt. Infolgedessen fließt das das thermoplastische Material und verformt sich plastisch. Es nähert an den Außenumfang der Borste 4 an, gegebenenfalls legt sich das thermoplastische Material auch gegen den Außenumfang der Borste 4 an. Am Ende der Verformung des Randes 27 überdeckt das thermoplastische Material bei Bezugszeichen 38 die Verdickung 12. Dadurch ist die Verdickung 12 in dem Borstenträger 18 formschlüssig eingesiegelt (vgl. Fig. 4).

Im Anschluss wird der Abstand zwischen dem Werkzeug 2 und dem Borstenträger 18 vergrößert. Aufgrund der formschlüssigen Halterung der Verdickung 12 in dem Borstenträger 18 bleibt die Borste 4 ortsfest. Das Werkzeug 2 wird abgezogen unter Hinterlassung der Borste 4 in dem Borstenträger 18.

In Figur 1 ist die Vorschubeinrichtung 32 zugunsten einer übersichtlichen grafischen Darstellung Weggelassen. Nach dem abziehen des Werkzeugs 18 wird eine mit Bezugszeichen 40 gekennzeichnete Bürste erhalten, die aus dem spritzgegossenen Borstenträger 18 Und den Borsten 4 besteht.

Es versteht sich, dass der Borstenträger 18 bei der Vorbereitung im Wege des Spritzgießens als Mehrkomponenten-Spritzgießteil mit unterschiedlichen Stoffkomponenten einschließlich zumindest einer elastomeren Komponente hergestellt sein kann. In Figur 1 ist mit Bezugszeichen 42 ein Spritzgießwerkzeug gekennzeichnet, das aus zwei Werkzeughälften 44, 46 gebildet ist. Die mit Bezugszeichen 44 gekennzeichnete obere Werkzeughälfte hat eine Trägerplattenaufnahme 48, in welcher die in Position A1 für sich mit dem Borstenträger 18 wiedergegebene Trägerplatte 16 aufgenommen ist. Wie Figur 1 schematisch darstellt, wird die Trägerplatte 16 von der Position E zurück zu dem Spritzgießwerkzeug 42 gebracht. Damit wird die Trägerplatte 16 einer mit Bezugszeichen 50 gekennzeichneten Einsiegelstrecke entnommen und zum Abformen des Borstenträgers 18 wiederverwendet. Im Bereich des Spritzgießwerkzeuges 42 sind mit Bezugszeichen 52 Stifte gekennzeichnet, die an der unteren Werkzeughälfte 46 in der den Borstenträger 18 ausformenden Kavität vorgesehen sind.

Figur 1 verdeutlicht ferner, dass das Werkzeug 2 auf der Einsiegelstrecke verbleibt und nach Entnahme der Borsten 4 (vgl. Position F) zurück in Position A verbracht und mit Borsten 4 versehen wird.

Durch das Entnehmen des Borstenträgers 18 aus dem Spritzgießwerkzeug 42 kann der Borstenträger 18 auch noch bei einer relativ hohen Temperatur gehandhabt werden. So erfolgt die Annäherung des Werkzeuges 2 zum Einsiegeln der Borsten 4 bei einer Temperatur, bei welcher das Material des Borstenträgers 18 noch durch den Spritzgießzyklus erwärmt ist. So wird die für den Spritzgießprozess aufgewandte Energie genutzt, um das thermoplastische Material des Borstenträgers 18 im Hinblick auf das Einsiegeln der Borsten 4 möglichst weich und fließfähig zu halten. Das erfindungsgemäße Verfahren lässt sich dementsprechend besonders ressourcenschonend durchführen.

Die Figur 6 zeigt eine Alternative Querschnittsgestaltung des Vorsprungs 22, die zu einem anderen Verformungsverhalten des thermoplastischen Kunststoffs beim Annähern von Werkzeug 2 und Borstenträger 18 führt. Der Vorsprung 22 weist hier eine zylindrische Basis auf, die mit einer Kuppel versehen ist, also einer halbkreisförmigen Kappe abgedeckt ist.

### Bezugszeichenliste

- 2: Werkzeug
- 4: Borste
- 6: Aufnahmeöffnung
- 8: befestigungsseitiges Ende
- 10: Werkzeugoberfläche
- 12: Verdickung
- 14: Wärmequelle
- 16: Trägerplatte
- 18: Borstenträger
- 20: Ausnehmung
- 22: Vorsprung
- 24: Vorderfläche
- 25: Vorderseite
- 26: Kante
- 27: Rand
- 28: Heizeinrichtung
- 30: Boden
- 32: Vorschubeinrichtung
- 34: Vorschubstift
- 36: nutzungsseitiges Ende
- 38: Überdeckung
- 40: Bürste
- 42: Spritzgießwerkzeug
- 44: obere Werkzeughälfte
- 46: untere Werkzeughälfte
- 48: Trägerplattenaufnahme
- 50: Einsiegelstrecke
- 52: Stift

## Patentansprüche

1. Verfahren zur Herstellung einer Bürste, insbesondere Zahnbürste, die einen Borstenträger (18) aus einem thermoplastischen Kunststoff mit einer Vorderseite (25) und einer Rückseite aufweist, wobei von der Vorderseite zumindest eine in dem Borstenträger (18) ausgesparte als Sackloch in dem Borstenträger (18) ausgebildete Ausnehmung (20) abgeht, in welcher wenigstens eine Borste (4) gehalten ist, bei dem
die wenigstens eine Borste (4) in einer Aufnahmeöffnung (6) eines Werkzeugs (2) aufgenommen wird,
die wenigstens eine Borste (4) zur Ausbildung einer Verdickung (12) an ihrem befestigungsseitigen Ende (8) angeschmolzen wird;
die wenigstens eine Borste (4) mit ihrem befestigungsseitigen Ende (8) in die Ausnehmung (20) eingebracht wird
der Abstand des Werkzeugs (2) zum Borstenträger (18) so reduziert wird, dass das Werkzeug (2) den Borstenträger (18) kontaktiert,
der thermoplastische Kunststoff erwärmt und durch Anpressen des Werkzeugs (2) gegen die Vorderseite des Borstenträgers (18) so verformt wird, dass der thermoplastische Kunststoff zumindest im Bereich eines die Ausnehmung (20) umgebenden Randes (27) zur formschlüssigen Einsiegelung der Verdickung (12) radial nach innen in die Ausnehmung (20) verdrängt wird, indem ein radial benachbart zu der Ausnehmung (20) vorgesehener Vorsprung (22) in den thermoplastischen Kunststoff eingedrückt wird, **dadurch gekennzeichnet, dass**
eine gegenüberliegend zu der Vorderseite des Borstenträgers (18) vorgesehene, der Kontur der Vorderseite des Borstenträgers (18) entsprechende Werkzeugoberfläche zusammen mit dem Vorsprung (22) in Richtung auf den Borstenträger (18) angenähert und am Ende der Relativbewegung zwischen dem Borstenträger (18) und dem Werkzeug (2) flächig gegen die Vorderseite angelegt wird.

2. Verfahren nach Anspruch 1, **dadurch gekennzeichnet, dass** der Vorsprung (22) in Form von auf einer Ringfläche liegenden Ringsegmenten auf die Vorderseite des Bürstenkörpers (25) einwirkt.

3. Verfahren nach Anspruch 1 oder 2, **dadurch gekennzeichnet, dass** der Vorsprung (22) eine an einem Ende spitz zulaufende Querschnittgeometrie hat.

4. Verfahren nach einem der vorhergehenden Ansprüche, **dadurch gekennzeichnet, dass** der Vorsprung (22) eine V-förmige Querschnittgeometrie hat.

5. Verfahren nach Anspruch 1 oder 2, **dadurch gekennzeichnet, dass** der Vorsprung (22) eine kuppelförmige Querschnittgeometrie hat.

6. Verfahren nach einem der vorhergehenden Ansprüche, **dadurch gekennzeichnet, dass** der Vorsprung (22) beheizt wird.

7. Verfahren nach einem der vorhergehenden Ansprüche, **dadurch gekennzeichnet, dass** der Vorsprung (22) von der Werkzeugoberfläche (10) abragt und dass dem Vorsprung (22) eine an dem Werkzeug (2) vorgesehene Heizung zugeordnet ist, durch die der Vorsprung (22) auf eine höhere Temperatur erwärmt wird als die Werkzeugoberfläche (10)

8. Verfahren nach einem der vorhergehenden Ansprüche, **dadurch gekennzeichnet, dass** der Borstenträger (18) eine Vielzahl von Ausnehmungen (20) und das Werkzeug (2) eine Vielzahl von Aufnahmeöffnungen (6) aufweist, in denen jeweils ein mehrere Borsten (4) aufweisendes Borstenbündel vorgesehen ist, dass die Borstenbündel zur Ausbildung einer Verdickung (12) angeschmolzen und anschließend mit ihrem befestigungsseitigen Ende (8) in die zugeordnete Ausnehmung (20) eingebracht werden und im Anschluss der die jeweilige Ausnehmung (20) umgebenden Rand zur formschlüssigen Einsiegelung der jeweiligen Verdickung (12) radial nach innen in die Ausnehmung (20) verdrängt wird, indem ein radial benachbart zu der jeweiligen Ausnehmung (20) vorgesehener Vorsprung (22) in den thermoplastischen Kunststoff eingedrückt wird.

9. Verfahren nach einem der vorhergehenden Ansprüche, **dadurch gekennzeichnet, dass** der Borstenträger (18) beim formschlüssigen Einsiegeln der Verdickung (12) noch eine aufgrund des Spitzgießens erhöhte Temperatur aufweist.

10. Verfahren nach einem der vorhergehenden Ansprüche, **dadurch gekennzeichnet, dass** der Borstenträger (18) beim formschlüssigen Einsiegeln der Verdickung (12) in einem den Borstenträger (18) beim Spitzgießens zumindest teilweise abformenden Formnestsegment gehalten ist.

11. Verfahren nach Anspruch 9, **dadurch gekennzeichnet, dass** das Formnestsegment vor dem formschlüssigen Einsiegeln der Verdickung (12) zusammen mit dem Borstenträger (18) aus einem den Borstenträger (18) formenden Spritzgießwerkzeug entnommen wird und auf einer Einsiegelstrecke (50) bewegt wird, auf der die Verdickung (12) eingesiegelt und der Borstenträger danach aus dem Formnestsegment entnommen und das Formnestsegment von der Einsiegelstrecke (50) entnommen und in das Spritzgießwerkzeug eingesetzt wird.
